**Europäisches Patentamt**

**European Patent Office**

**Office européen des brevets**

(19)

(11) **EP 1 494 059 A1**

(12) **EUROPÄISCHE PATENTANMELDUNG**

(43) Veröffentlichungstag:
**05.01.2005 Patentblatt 2005/01**

(51) Int Cl.$^7$: **G02B 21/24**

(21) Anmeldenummer: **04015052.6**

(22) Anmeldetag: **26.06.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(30) Priorität: **03.07.2003 DE 10330714**

(71) Anmelder: **Carl Zeiss SMS GmbH**
**07745 Jena (DE)**

(72) Erfinder:
- **Engel, Thomas**
**99102 Erfurt OT Niedernissa (DE)**
- **Lück, Wolfgang**
**07751 Zöllnitz (DE)**

(54) **Verfahren zum automatischen Fokussieren bei der Abbildung eines Objektes**

(57) Die Erfindung bezieht sich auf ein Verfahren zum automatischen Fokussieren bei der Abbildung eines Objektes mittels einer Abbildungsoptik auf eine Empfangseinrichtung, die eine aus einer Vielzahl von Sensorelementen gebildete Empfangsfläche aufweist. Die Erfindung ist insbesondere zur Scharfeinstellung bei der Mikroskopie von Objektstrukturen, wie Kanten und Konturen auf einer Objektseite, nutzbar.

Erfindungsgemäß ist vorgesehen, daß

- der Abstand zwischen der Abbildungsoptik und dem Objektiv mehrfach um einen vorgegebenen Betrag verändert und nach jeder Veränderung eine Abbildung der Objektstruktur gewonnen wird,
- für jede der so gewonnenen Abbildungen die Anzahl x der Sensorelemente bestimmt wird, die an der Abbildung beteiligt sind,
- diese Anzahl x dem Abstand zugeordnet wird, bei dem die betreffende Abbildung gewonnen wurde und
- als optimierter Fokusabstand $z_F$ der Abstand eingestellt oder beibehalten wird, bei dem die Anzahl x der an der Abbildung beteiligten Sensorelemente am kleinsten ist.

Fig.3

**Beschreibung**

Die Erfindung bezieht sich auf ein Verfahren zum automatischen Fokussieren bei der Abbildung eines Objektes mittels einer Abbildungsoptik auf eine Empfangseinrichtung, die eine aus einer Vielzahl von Sensorelementen gebildete Empfangsfläche aufweist. Die Erfindung ist insbesondere zur Scharfeinstellung bei der Mikroskopie von Objektstrukturen, wie Kanten und Konturen auf einer Objektseite, nutzbar.

Es sind verschiedenartige Fokussierverfahren bekannt, darunter abbildende Verfahren, bei denen die der Autofokussierung zugrunde zu legenden Meßwerte durch Auswertung des Kontrastes oder der Helligkeit des von der Objektoberfläche reflektierten Lichtes ermittelt werden. Diesem Sachgebiet ist die vorliegende Erfindung zuzuordnen.

Diesbezüglich ist aus DE 3340647 A1 ein "Verfahren zur Fokussierung eines Mikroskopes sowie Mikroskop zur Durchführung des Verfahrens" bekannt, bei dem mit Hilfe eines Sensors von jedem Bildpunkt der Betrag der Helligkeitsdifferenz zu seinen beiden benachbarten Bildpunkten gebildet wird und die Helligkeitsdifferenzen für sämtliche Bildpunkte aufaddiert werden. Danach wird der Abstand zwischen der Abbildungsoptik und dem Objekt verstellt und es werden erneut die Helligkeitsdifferenzen bestimmt und addiert. Dieser Vorgang wird wiederholt, und schließlich wird der Abstand zwischen Abbildungsoptik und Objekt als Fokusabstand ausgewählt, bei dem die Summe der Helligkeitsdifferenzen ein Maximum darstellt.

Dieses Verfahren einschließlich der dazugehörigen Vorrichtung erfordert verhältnismäßig viel Rechenkapazität, da sehr viele Bildinformationen in Form von Hell-Dunkel-Übergängen ausgewertet und verarbeitet werden müssen, was eine entsprechend lange Fokussierdauer zur Folge hat. Daraus ergibt sich insbesondere für Anwendungen in automatischen Fertigungs- oder Prüfeinrichtungen, bei denen es auf einen hohen Durchsatz an Prüflingen ankommt, das Bedürfnis nach Verfahren und Anordnungen mit kürzeren Fokussierzeiten.

Ausgehend davon liegt der Erfindung die Aufgabe zugrunde, ein Verfahren der eingangs genannten Art dahingehend weiterzuentwickeln, daß eine schnellere Fokussierung bei der Abbildung von Oberflächenstrukturen eines Objektes möglich ist. Eine weitere Aufgabe besteht darin, eine Anordnung zur Durchführung eines solchen effizienteren Verfahrens anzugeben.

Erfindungsgemäß ist vorgesehen, daß

- der Abstand zwischen der Abbildungsoptik und dem Objektiv mehrfach um einen vorgegebenen Betrag verändert und nach jeder Veränderung eine Abbildung der Objektstruktur gewonnen wird,
- für jede der so gewonnenen Abbildungen die Anzahl x der Sensorelemente bestimmt wird, die an der Abbildung beteiligt sind,
- diese Anzahl x dem Abstand zugeordnet wird, bei dem die betreffende Abbildung gewonnen wurde und
- als optimierter Fokusabstand $z_F$ der Abstand eingestellt oder beibehalten wird, bei dem die Anzahl x der an der Abbildung beteiligten Sensorelemente am kleinsten ist.

Mit diesem erfindungsgemäßen Verfahren werden bei jeder Abbildung lediglich die Sensorelemente gezählt, die an der Abbildung einer ausgewählten Objektstruktur beteiligt sind. Diese Auszählung kann mit einer entsprechend konfigurierten Anordnung wesentlich schneller ausgeführt werden als die Auswertung einer Vielzahl von Hell-Dunkel-Übergängen je Bildelement, wie dies im eingangs zitierten Stand der Technik der Fall ist.

Insofern ist auch verhältnismäßig schnell der Abstand zwischen Abbildungsoptik und Objekt gefunden, bei dem die Anzahl x der an der Abbildung beteiligen Sensorelemente am kleinsten ist. Wird der so ermittelte Fokusabstand $z_F$ beibehalten oder eingestellt, erhält man die gewünschte scharfe Abbildung der Objektstruktur.

Selbstverständlich ist es auch möglich, gezielt eine Unschärfe einzustellen, indem nach Auffinden des optimalen Fokusabstandes $z_F$ dieser um eine vorgegebene Schrittweite wieder verstellt und auf diese Weise eine definierte Defokussierung eingestellt wird. Dies ist z.B. nützlich bei einem Wechsel der Abbildungswellenlänge oder zum Feinabgleich zwischen unterschiedlichen Abbildungsstrahlengängen.

In einer besonders bevorzugten Ausgestaltung des erfindungsgemäßen Verfahrens wird zunächst ein Abstand $z_1$ eingestellt; dann bei dem Abstand $z_1$ die Objektstruktur abgebildet und die Anzahl $x_1$ der Sensorelemente ermittelt und gespeichert, die an der Abbildung beteiligt sind und dabei ein Empfangssignal mit einer Intensität I abgeben, die im Bereich zwischen zwei vorgegebenen Intensitätswerten $I_a$ und $I_b$ liegt; anschließend wird ein um einen Betrag $s_1$ veränderter Abstand $z_2$ eingestellt, wiederum die Objektstruktur abgebildet und die Anzahl $x_2$ der Sensorelemente ermittelt, die nun an der Abbildung der Objektstruktur beteiligt sind; danach wird die Differenzanzahl $\Delta x = x_1 - x_2$ gebildet und bewertet, wobei bei einem Ergebnis mit negativem Vorzeichen ($x_1 < x_2$) der vorangegangene Verfahrensschritt in entgegengesetzter Richtung wiederholt wird und bei einem Ergebnis mit positivem Vorzeichen ($x_1 > x_2$) weitere Abstandsänderungen um Beträge $s_2$, $s_3$ usw. bis $s_n$ vorgenommen werden; nach einer jeden Abstandsänderung wird die Objektstruktur abgebildet, die Anzahlen $x_3$, $x_4$ bis $x_{n+1}$ der an den Abbildungen jeweils beteiligten Sensorelemente ermittelt und die Differenzanzahlen $\Delta x = x_2 - x_3$; $\Delta x = x_3 - x_4$ ... $\Delta x = x_n - x_{n+1}$ gebildet. Dieser Vorgang wird dann beendet, wenn sich nach einer Abstandsänderung eine Differenzanzahl $\Delta x$ ergibt, die kleiner ist als eine als Abbruch-

kriterium $\Delta x_A$ vorgegebene Differenzanzahl. Der dabei erreichte Abstand wird als Fokusabstand $z_F$ eingestellt bzw. beibehalten.

Die vorzugebenden Intensitätswerte $I_a$ und $I_b$ können bestimmt werden in Abhängigkeit von dem Dynamikbereich der Sensorelemente bzw. der Empfangsfläche, der Intensitätsverteilung in einer Abbildung der Objektstruktur oder in Abhängigkeit von der Objektstruktur, wenn die Belichtungsund Objekteigenschaften bekannt sind.

So ist es z.B. denkbar, die Folge von Abbildungen bei einer Differenzanzahl $\Delta x$ zu beenden, deren Betrag etwa 8% der an der Abbildung beteiligten Sensorelemente entspricht. Ist dieser Differenzwert erreicht, wird keine weitere Verstellung des Abstandes zwischen der Abbildungsoptik und dem Objekt vorgenommen und der Abstand, bei dem die entsprechende Abbildung gewonnen wurde, wird als Fokusabstand $z_F$ beibehalten bzw. wieder eingestellt und bei Bedarf in Zuordnung zu dem betreffenden Objekt gespeichert.

Eine weitere Ausgestaltung des erfindungsgemäßen Verfahrens bezieht sich auf die automatische Fokussierung bei der zeitlich aufeinanderfolgenden Abbildung von mehreren Objekten bzw. Objektausschnitten gleichen Inhalts, die beispielsweise zu einer Fertigungsserie gehören, wobei alle Objekte der Serie dieselbe Objektstruktur, auf die zwecks Beobachtung zu fokussieren ist, aufweisen.

Dabei ist vorgesehen, daß bei einem ersten Objekt der Serie zunächst die Verfahrensschritte a) bis e) nach Anspruch 2 ausgeführt werden und dann die Anzahl $x_F$ der Sensorelemente gespeichert wird, die beim Erreichen des Abbruchkriteriums und damit beim Erreichen des Fokusabstandes $z_F$ an der Abbildung beteiligt sind. Bei der Abbildung der Objektstruktur von jedem weiteren Objekt wird zunächst ein Abstand $z_1$ eingestellt, die Objektstruktur abgebildet und die Anzahl $x_1$ der an dieser Abbildung beteiligten Sensorelemente ermittelt; nun wird nach jeweils einer weiteren Abstandsänderung die Objektstruktur erneut abgebildet und für jede weitere Abbildung die Anzahl $x$ der Sensorelemente bestimmt, die an der Abbildung beteiligt sind. Die jeweils ermittelte Anzahl $x$ wird mit der gespeicherten Anzahl $x_F$ verglichen und als Fokusabstand $z_F$ wird der Abstand eingestellt, bei dem die Anzahl $x$ von der Anzahl $x_F$ um eine vorgegebene Minimalanzahl, bevorzugt um die Anzahl "null", abweicht.

Eine weitere Besonderheit bei der Ausgestaltung des erfindungsgemäßen Verfahrens besteht darin, daß bei einem Abstand $z_1$ beginnend zunächst Abstandsänderungen um Beträge $s_1$ und danach Abstandsänderungen um Beträge $s_2<s_1$, $s_3<s_2$, $s_4<s_3$ usw. bis $s_{n+1}<s_n$ vorgenommen werden, wobei bevorzugt der Betrag $s_1$ zur Grobeinstellung der Fokusposition dient und im Bereich zwischen 5 µm und 1,5 mm liegt, und die Beträge $s_2$, $s_3$ bis $s_{n+1}$ zur Feineinstellung dienen und im Bereich von 0,1 nm und 0,05 mm liegen.

Die Erfindung bezieht sich weiterhin auf eine Anordnung zur Ausübung des erfindungsgemäßen Verfahrens, umfassend

- ein als CCD-Sensor ausgebildetes Array aus einer Vielzahl von optoelektronischen Sensorelementen,
- ein Objektiv mit nachfolgender Abbildungsoptik zur Abbildung einer Objektstruktur auf den CCD-Sensor,
- eine mit einem Antrieb versehene Zustelleinrichtung zur Änderung des Abstandes $\Delta z$ zwischen Objekt und Objektiv um Beträge $s_1, s_2$ bis $s_n$,
- eine Auswerteeinrichtung mit einem Speicher für die Anzahlen $x_1$, $x_2$ bis $x_{n+1}$ von Sensorelementen, die jeweils an der Abbildung der Objektstruktur beteiligt sind sowie
- eine Rechenschaltung zur Differenzbildung $\Delta x_{12}=x_1-x_2$; $\Delta x_{23}=x_2-x_3$ bis $\Delta x_{nn+1}=x_n-x_{n+1}$ aus diesen Anzahlen $x_1,x_2$ bis $x_{n+1}$, wobei
- die Auswerteeinrichtung über einen Ausgang für Stellsignale verfügt und über diesen mit dem Antrieb der Zustelleinrichtung verbunden ist.

Die Erfindung soll nachfolgend anhand eines Ausführungsbeispieles näher erläutert werden. In den zugehörigen Zeichnungen zeigen

Fig.1a    die Abhängigkeit der Anzahl der an der Abbildung einer Objektstruktur beteiligten Sensorelemente von der Intensität des Empfangssignals bei einem ersten Abstand zwischen Abbildungsoptik und Objekt,

Fig.1b    die Abhängigkeit der Anzahl der an einer Abbildung derselben Objektstruktur beteiligten Sensorelemente von der Intensität des Empfangssignals, jedoch in einem gegenüber Fig.1a veränderten Abstand zwischen Abbildungsoptik und Objekt,

Fig.2    die Abhängigkeit der Anzahl der an einer Abbildung beteiligten Sensorelemente vom Abstand zwischen der Abbildungsoptik und einem Objekt,

Fig.3    die Abfolge der Verfahrensschritte bei einer ersten Ausgestaltungsvariante der Erfindung,

Fig.4    die Abfolge der Verfahrensschritte bei einer zweiten Ausgestaltungsvariante der Erfindung,

Fig.5    Konstellationen benachbarter Sensorelemente, die der Auswertung der Empfangssignale zugrunde gelegt werden können.

Der Erfindungsgedanke geht davon aus, daß bei der Abbildung eines Objektes bzw. einer Objektstruktur, die sich an der Oberseite des Objektes befindet, wie beispielsweise einer Kante, auf eine aus einer Vielzahl von Sensorelementen gebildeten Empfangsfläche um so mehr von diesen Sensorelementen an der Erzeugung der Bildinformation und damit an der Abbildung beteiligt sind, je weiter die abzubildende Objektstruktur aus dem Fokus der Abbildungsoptik entfernt positioniert ist. Die Intensität der je Sensorelement gewonnenen Empfangssignale verhält sich dabei umgekehrt proportional zu der Anzahl der an der Abbildung beteiligten Sensorelemente.

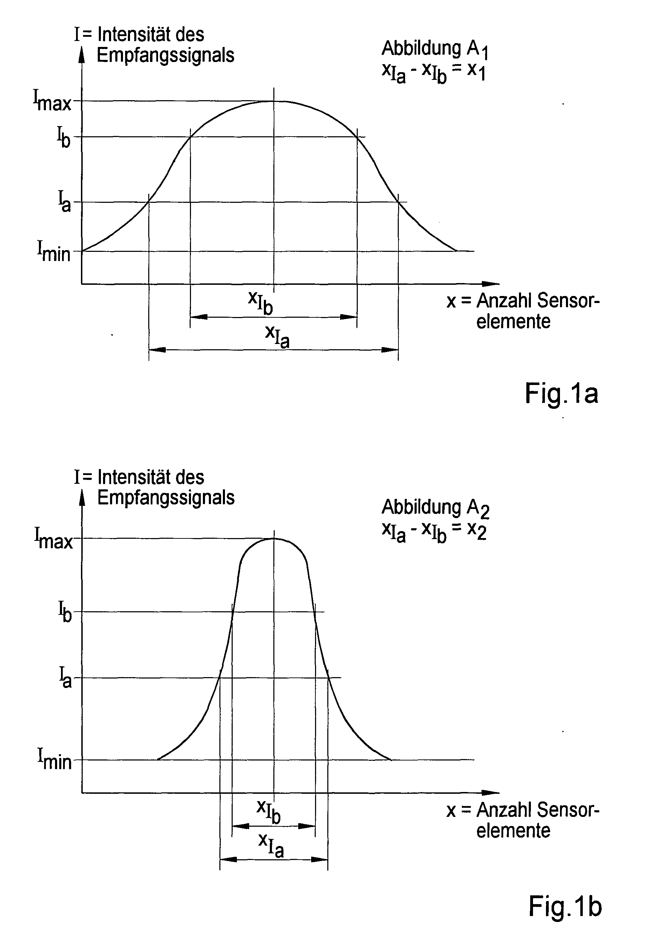

Dieser Sachverhalt soll nachfolgend anhand Fig.1a und Fig.1b näher erläutert werden. Als Empfangsfläche sei dabei der Flächensensor einer CCD-Kamera vorgesehen, der beispielsweise aus einem Array von 640*480 Sensorelementen, fachüblich auch als Pixel bezeichnet, gebildet ist.

Fig.1a zeigt die Abhängigkeit der Intensität I des bei einer Abbildung $A_1$ einer Linie (charakterisiert durch eine rechte und eine linke Flanke) gewonnenen Empfangssignals von der Anzahl x der beteiligten Sensorelemente, wobei die Abbildung $A_1$ bei einem Abstand $z_1$ zwischen der Abbildungsoptik und der Objektseite, auf der sich die abgebildete Kante befindet, gewonnen wurde.

An der Erzeugung des Empfangssignals ist eine verhältnismäßig große Anzahl x der insgesamt verfügbaren Sensorelemente beteiligt, jedoch sind die Intensitätswerte der von den einzelnen Sensorelementen gewonnenen Signale voneinander verschieden. Betrachtet man den ausgewählten Intensitätsbereich zwischen $I_a$ und $I_b$, so ist erkennbar, daß die innerhalb dieses Bereiches liegenden Intensitätswerte von einer Anzahl $x_1=x_{Ia}-x_{Ib}$ an Sensorelementen bereitgestellt werden.

In Fig.1b ist der Sachverhalt aus Fig.1a anhand einer Aufnahme $A_2$ derselben Linie dargestellt, die jedoch bei einem gegenüber Fig.1a geänderten Abstand $z_2$ gewonnen wurde. Hier wird eine schärfere Abbildung erzeugt, bei der insgesamt weniger Sensorelemente an der Abbildung $A_2$ beteiligt sind. Betrachtet man hier wiederum wie in Fig. 1a den Intensitätsbereich zwischen $I_a$ und $I_b$, so wird deutlich, daß weniger Sensorelemente Intensitätswerte liefern, die innerhalb dieses Intensitätsbereiches $I_a$ und $I_b$ liegen. Die Anzahl $x_2$ dieser Pixel ergibt sich dabei wiederum aus der Differenz $x_{Ia}-x_{Ib}$.

Der Vergleich des Intensitätsprofiles nach Fig.1a mit dem Intensitätsprofil nach Fig.1b zeigt, daß bei der Abbildung derselben Strukturlinie mit verändertem Fokusabstand, innerhalb desselben relativen Intensitätsbereiches $I_a$ und $I_b$, unterschiedliche Anzahlen $x_1$ und $x_2$ an Sensorelementen registrierbar sind. Die Differenz beträgt $\Delta x_{12}=x_1-x_2$.

Daraus wird deutlich, daß die Anzahl x der Sensorelemente, die an der Erzeugung von Abbildungen beteiligt sind und die innerhalb des Intensitätsbereiches $I_a$ bis $I_b$ liegen, um so kleiner ist, je schärfer die Abbildung ist bzw. je geringer die Abweichung der Position der abzubildenden Objektstruktur von der besten Fokusposition ist. Aus der Erhöhung oder Verringerung der Anzahl x bei Verstellung des Abstandes z kann demzufolge weiterhin darauf geschlossen werden, ob die Verstellrichtung zur Fokusposition hin oder von der Fokusposition weg führt.

Mit anderen Worten: Die Steilheit einer Flanke der Intensitätsprofile in Fig.1a und Fig.1b innerhalb des Intensitätsbereiches $I_a$ bis $I_b$ ist ein Maß für den Abstand des Fokuspunktes von der aufzunehmenden Objektstruktur, und die Neigungsrichtung dieser Flanke gibt einen Hinweis auf die Richtung, in der die Verstellung zur Fokusposition hin erfolgen muß.

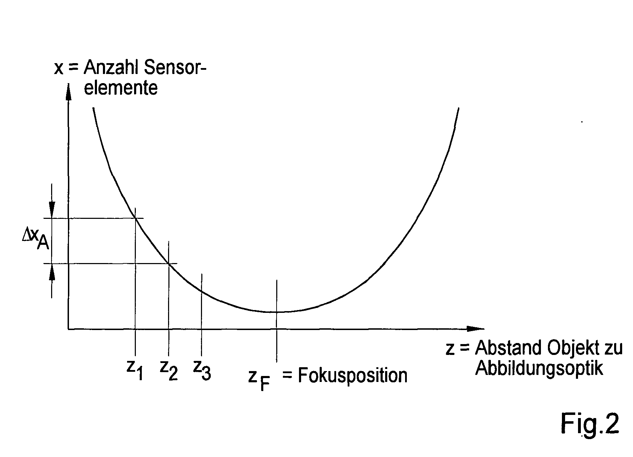

Dieser Zusammenhang ist in Fig.2 verdeutlicht dargestellt. Hier ist zu erkennen, daß sich die Anzahl x der Sensorelemente verringert, wenn sich die Fokusabstände $z_1$, $z_2$ usw. der Fokusposition $z_F$ nähern. Entspricht der Abstand z der Fokusposition, ist die minimale Anzahl x an Sensorelementen an der Abbildung einer Objektstruktur beteiligt. Aus Fig.2 geht weiterhin hervor, daß die Anzahl x der an einer Abbildung beteiligten Sensorelemente wieder größer wird, wenn die Verstellung des Abstandes z über den Abstand $z_F$ hinausgeht, welcher der idealen Fokusposition entspricht.

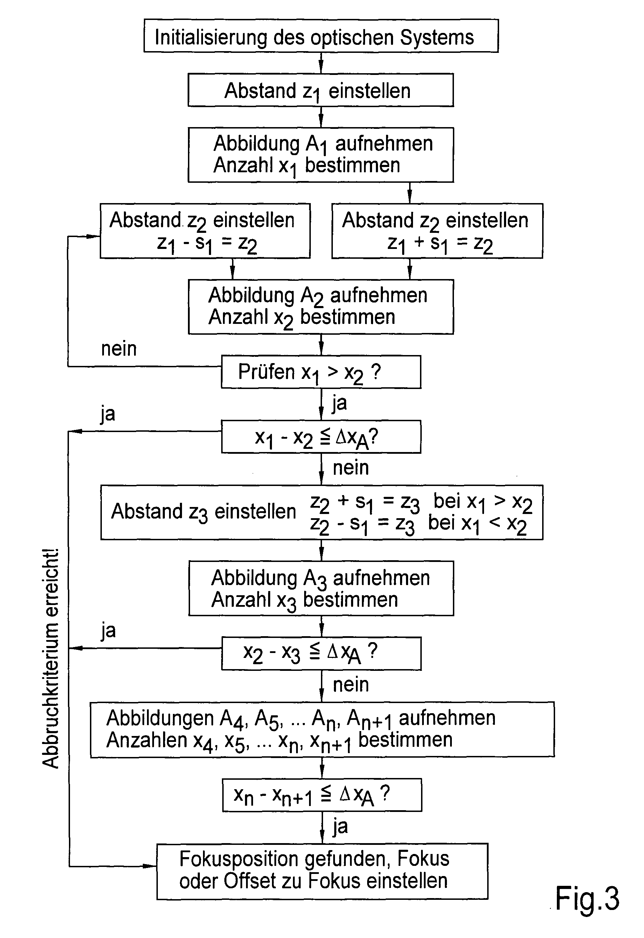

Davon ausgehend soll zunächst eine erste Ausgestaltungsvariante des erfindungsgemäßen Verfahrens anhand Fig.3 erläutert werden. Der erste Verfahrensschritt ist die Initialisierung des optischen Systems, das beispielsweise ein im Auflicht- oder Durchlichtbetrieb genutztes Mikroskop oder auch ein Mikroskop in einem Inspektionssystem, etwa einem Masken-, Wafer- oder Displayinspektionssystem, sein kann. Die Initialisierung bezieht sich auf die Inbetriebnahme des optischen Systems, auf die Vorgabe der Grenzwerte für den Intensitätsbereich $I_a$ bis $I_b$, auf die Vorgabe eines Abstandes $z_1$ zwischen Abbildungsoptik und Objektoberfläche bei der ersten Abbildung $A_1$, auf die Vorgabe der Schrittweiten bei der Einstellung der Abstände $z_2, z_3...z_n$ in Richtung der optischen Achse der Abbildungsoptik, auf die Vorgabe von Abbruchkriterien für die automatische Fokussierung beim Erreichen der idealen Fokusposition (dem Abstand $z_F$ entsprechend) oder einer Fokusposition nahe dem Abstand $z_F$ und ggf. auch auf die Vorgabe eines Fokus-Offsets.

Nach der Initialisierung wird zunächst der Abstand $z_1$ zwischen Abbildungsoptik und Objektoberfläche eingestellt. Bei diesem Abstand $z_1$ wird eine Abbildung $A_1$ einer ausgewählten Objektstruktur, etwa der bereits erwähnten Kante, aufgenommen und die Anzahl $x_1$ der beteiligten Sensorelemente, wie anhand Fig.1a dargestellt, bestimmt.

Danach wird ein Abstand $z_2$ zwischen der Abbildungsoptik und der Objektoberfläche eingestellt, bei diesem Abstand $z_2$ eine Abbildung $A_2$ aufgenommen und die Anzahl $x_2$ bestimmt, wie beispielsweise anhand Fig.1b dargestellt.

Im nächsten Schritt wird geprüft, ob die Anzahl $x_1$ größer ist als die Anzahl $x_2$. Aus welchem Grund diese Prüfung notwendig ist, wird aus Fig.2 deutlich. Befinden sich nämlich die Abstände $z_1$ und $z_2$, wie in Fig.1b dargestellt, links von der idealen Fokusposition $z_F$, so verringert sich bei der Verstellung von $z_1$ nach $z_2$ die Anzahl der an der Abbildung beteiligten Sensorelemente.

Im Umkehrschluß gibt die Verringerung der Anzahl x Auskunft darüber, ob die Verstellbewegung von $z_1$ nach $z_2$ auf die Fokusposition hin gerichtet ist. Wäre dagegen mit der Verstellung von $z_1$ nach $z_2$ eine Erhöhung der Anzahl x der Sensorelemente zu verzeichnen, wäre davon auszugehen, daß sich der Abstand $z_1$ bereits rechts von der Fokusposition $z_F$ befindet und eine Beibehaltung der Verstellrichtung von der idealen Fokusposition $z_F$ wegführen würde.

Ergibt dieser Verfahrensschritt also, daß $x_1$ kleiner ist als $x_2$, muß die Verstellung der Fokusposition von $z_1$ nach $z_2$ in entgegengesetzter Richtung wiederholt, danach die Abbildung $A_2$ erneut aufgenommen und wieder die Anzahl $x_2$ bestimmt werden. Nach dieser Umkehrung der Verstellrichtung ist die Bedingung erfüllt, daß $x_1$ größer ist als $x_2$ und somit die Verstellbewegung zur idealen Fokusposition hin führt. Fokuspositionen zwischen $z_1$ und $z_2$ werden dabei nicht eingestellt.

In einem nächsten Schritt ist zu prüfen, ob die Differenz $x_1 - x_2$ kleiner oder gleich $\Delta x_A$ ist, wobei $\Delta x_A$ als Abbruchkriterium gilt. Wie aus Fig.2 ersichtlich ist, wird die Differenz $\Delta x_A$ um so kleiner, je mehr sich (bei gleicher Schrittweite) die Abstände $z_2, z_3...z_n$ dem Abstand $z_F$ und damit der idealen Fokusposition nähern. Die vorgegebene Differenz $\Delta x_A$ ist also ein Äquivalent für die hinreichende Nähe der idealen Fokusposition.

Ist die Differenz $\Delta x_A$ als Abbruchkriterium erreicht, bedeutet dies zugleich, daß die gewünschte Fokusposition gefunden ist und zur Aufnahme scharfer Abbildungen der Oberflächenstruktur eingestellt werden kann.

Ist das Abbruchkriterium $\Delta x_A$ nach der Aufnahme $A_2$ nicht erreicht, wird der Abstand $z_3$ eingestellt, und zwar in der Richtung, die nach Erfüllung des Kriteriums $x_1 > x_2$ festgelegt worden ist.

Beim Abstand $z_3$ wird die Abbildung $A_3$ aufgenommen und die Anzahl $x_3$ der beteiligten Sensorelemente bestimmt. Danach wird durch Vergleich der Differenz $x_2 - x_3$ mit $\Delta x_A$ wiederum geprüft, ob das Abbruchkriterium $\Delta x_A$ erreicht bzw. bereits unterschritten ist. Ist dies der Fall, ist jetzt die Fokusposition gefunden. Ist dies nicht der Fall, werden die Abstände $z_4, z_5...z_n$ weiterhin Schritt für Schritt eingestellt, nach jeder Verstellung eine Abbildung $A_4, A_5...A_n$ aufgenommen, jeweils zur vorhergehenden Abbildung die Differenzanzahl $\Delta x$ der beteiligten Sensorelemente gebildet und mit dem Abbruchkriterium $\Delta x_A$ verglichen, und zwar so oft, bis die ermittelte Differenzanzahl $\Delta x$ gleich oder kleiner ist als das Abbruchkriterium $\Delta x_A$ und so der Abstand $z_n$ gefunden ist, der entweder der idealen Fokusposition exakt entspricht oder innerhalb eines mit dem Abbruchkriterium $\Delta x_A$ vorgegebenen Abstandes zur idealen Fokusposition liegt.

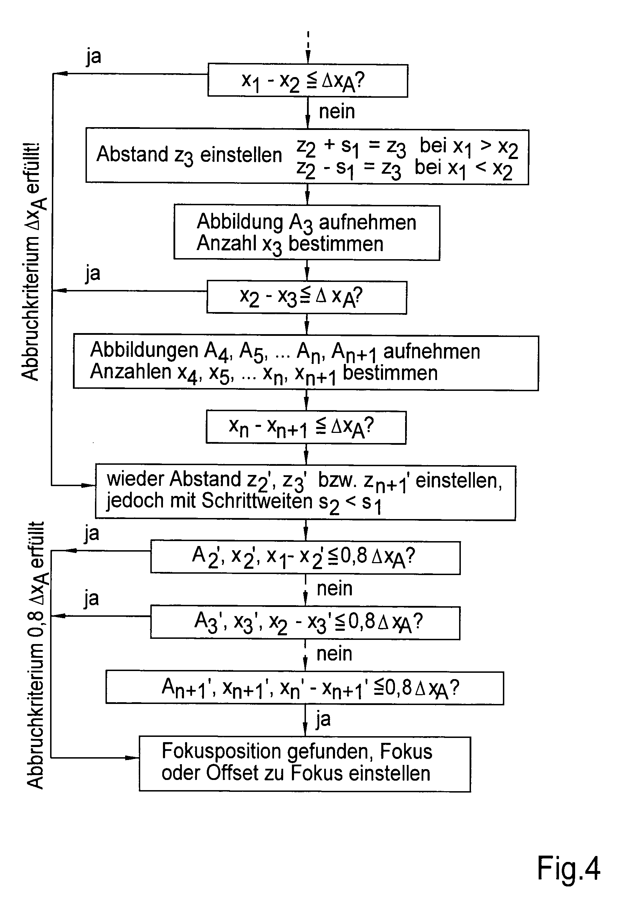

In Fig.4 ist eine Ausgestaltungsvariante dargestellt, bei der zunächst eine grobe Fokuseinstellung anhand eines Abbruchkriteriums $\Delta x_A$ vorgenommen wird. Wie im vorgenannten Beispiel werden auch hier bei unterschiedlichen Fokuspositionen $z_1, z_2...z_n$ Abbildungen $A_1, A_2...A_n$ gewonnen, von jeder dieser Abbildungen $A_1, A_2...A_n$ die Anzahl x der beteiligten Sensorelemente bestimmt, jeweils die Differenzanzahl $\Delta x$ ermittelt und in der Weise wie bereits dargestellt bewertet, wonach die Serie von Aufnahmen zunächst unterbrochen wird, wenn die aktuelle Differenzanzahl $\Delta x$ kleiner oder gleich dem Abbruchkriterium $\Delta x_A$ ist.

Ist das Abbruchkriterium $\Delta x_A$ erreicht, werden nun von dem dabei erreichten Abstand ausgehend, der mit als $z_1'$ bezeichnet werden soll, wiederum Abstände $z_2', z_3'...z_n'$ eingestellt, die jedoch durch verringerte Schrittweiten $s_1 < s_2$ voneinander abweichen. Dabei werden wie bereits beschrieben jeweils Abbildungen gewonnen, von Abbildung zu Abbildung die Differenzanzahlen $\Delta x$ der beteiligten Sensorelemente gebildet und nun mit einem um den Faktor 0,8 verringerten Abbruchkriterium $\Delta x_A$ verglichen. Dies erfolgt wiederum so lange, bis die aktuelle Differenzanzahl $\Delta x$ kleiner oder gleich dem verringerten Abbruchkriterium $0,8\Delta x_A$ ist, womit die Fokusposition entweder exakt gefunden ist oder eine dem verringerten Abbruchkriterium $0,8\Delta x_A$ entsprechende Nähe der Fokusposition gefunden ist.

In Fig.4 wurde beispielhaft ein Faktor 0,8 zur Verringerung des Abbruchkriteriums im zweiten Iterationsschritt gewählt. Davon abweichend ist es unter Umständen von Vorteil, die Größe dieses Faktors in Abhängigkeit von der Veränderung der Schrittweite zu variieren. So kann beispielsweise vorgesehen sein, mit dem Übergang auf eine Schrittweite $s_3$ einen Faktor 0,7 vorzugeben, so daß die Bestimmung der Fokusposition dann als beendet gilt, wenn eine dem verringerten Abbruchkriterium $0,7\Delta x_A$ entsprechende Nähe der Fokusposition gefunden wurde.

Denkbar ist es auch und liegt im Rahmen der Erfindung, daß ausgehend von der ermittelten Folge von Differenzen $x_1 - x_2$, $x_2 - x_3$ bis $x_n - x_{n+1}$ der weitere Verlauf durch Interpolationsrechnung bestimmt wird und daraus rechnerisch die Fokusposition $z_F$ ermittelt wird, die dann einzustellen ist. Es wird also aus einer Mindestanzahl der vorgenannten Differenzen der Verlauf der Kurve rechnerisch ermittelt, die in Fig.2 dargestellt ist, und daraus rechnerisch die einzustellende Fokusposition gefunden. Dies hat den Vorteil, daß das erfindungsgemäße Verfahren mit einer geringen Anzahl mechanischer Verstellvorgänge zur Änderung des Fokusabstandes von $z_1$ nach $z_2$, $z_2$ nach $z_3$ usw. auskommt und damit die ideale, zumindest optimale Fokusposition $z_F$ wesentlich schneller gefunden werden kann.

Anhand der bisherigen Ausführungen wurden die Kriterien dargelegt, nach denen die Sensorelemente ermittelt werden, die jeweils an einer Abbildung beteiligt sind und die Empfangssignale mit einem Intensitätswert I abgeben, der in einem Bereich zwischen zwei vorgegebenen Intensitätswerten $I_a$ und $I_b$ liegt.

Ergänzend dazu wird nachfolgend auf Möglichkeiten hingewiesen, diese Empfangssignale auszuwerten, um damit die Genauigkeit der automatischen Fokussierung positiv zu beeinflussen.

Erfindungsgemäß kann diesbezüglich im Anschluß an die Zählung der Sensorelemente, deren Ausgangssignale die vorgenannten Kriterien erfüllen, je nach Wahl eine der folgenden mathematischen Verknüpfungen vorgenommen werden.

So ist es z.B. denkbar, die Empfangssignale (fachüblich auch als Bildinformationen bezeichnet) durch Summation des Betrages der Abweichung zu benachbarten Sensorelementen auszuwerten nach der Funktion

$$C = \sum_{n=1}^{N} \sum_{i} |x_n - x_i|$$

Oder die Empfangssignale durch Summation des Betrages der Abweichung zu benachbarten Sensorelementen auszuwerten und das Ergebnis auf die Zahl der an der Abbildung beteiligten Sensorelemente zu normieren nach der Funktion

$$C = \frac{\sum_{n=1}^{N} \sum_{i} |x_n - x_i|}{N}$$

wobei an der Berechnung jeweils zwei Sensorelemente beteiligt sind.

Weiterhin besteht die Möglichkeit, die Bildinformationen durch Summation der quadratischen Abweichung zu benachbarten Sensorelementen auszuwerten nach der Funktion

$$C = \sum_{n=1}^{N} \sum_{i} (x_n - x_i)^2$$

Auch hierbei kann das Ergebnis der Summation der quadratischen Abweichung zu benachbarten Sensorelementen normiert werden auf den Mittelwert, die Summe der Bildinformationswerte oder die Zahl der beteiligten Sensorelemente nach der Funktion

$$C = \frac{\sum_{n=1}^{N} \sum_{i} (x_n - x_i)^2}{N}$$

wobei an der Berechnung wiederum jeweils zwei Sensorelemente beteiligt sind.

Soll auch das Signalrauschen berücksichtigt werden, kann diese Auswertung vorgenommen werden nach der Funktion

$$C = \frac{\sum_{n=1}^{N} \sum_{i} ((x_n - R_n) - (x_i - R_i))^2}{N}$$

Die Berücksichtigung des Signalrauschens der Pixel kann übrigens auch bei den bereits vorher genannten Varianten der Auswertung berücksichtigt werden. Das betrifft sowohl das Dunkelrauschen als auch das statistische Rauschen (shot noise).

Der Dunkelstrom der Empfangseinrichtung läßt sich am einfachsten berücksichtigen durch Subtraktion eines Dunkelbildes, das abgesehen von den Belichtungseinstellungen mit ansonsten gleichen Meßbedingungen aufgenommen worden ist. Für das statistische Rauschen kann man aus der ermittelten Photonenzahl bzw. dem Empfangssignalwert auf die Elektronenzahl zurückrechnen, dafür den Rauschanteil bestimmen und von dem betreffenden Signal abziehen.

Bei der Rauschberechnung für die an der jeweiligen Abbildung beteiligten Sensorelemente wird die Zahl die Signalelektronen berechnet nach

$$n_n = \text{FWC} * x_A.$$

Darüber hinaus kann noch das Dunkelrauschen der Sensorelemente aus einem Vergleichsbild berücksichtigt werden nach

$$n_n = \text{FWC} * (x_A - x_{A,D}).$$

Aus dem so gewonnenen effektiven Signal kann weiterhin noch der Einfluß des Ausleserauschens $n_r$ berücksichtigt werden, indem zunächst das Signal-Rausch-Verhältnis berechnet wird nach

$$snr_n = \frac{\sqrt{\sqrt{n_n}^2 + n_r^2}}{n_n} = \frac{\sqrt{n_n + n_r^2}}{n_n}$$

Aus diesen den Sensorelementen zugeordneten Werten wird der Mittelwert für die gesamte Abbildung bzw. das gesamte Bild berechnet. Aus dem Verhalten der Mittelwerte über die Defokussierung wird dann im Extremum, bevorzugt dem Maximum, die beste Fokusposition bestimmt.

Verallgemeinert läßt sich eine symbolische Beschreibung dieser Auswertungen in folgender Form angegeben:

$$C = f(x_n, R_n, x_i, R_i, x_{min}, x_{max}, n_r, t_B, B)$$

In den vorgenannten Funktionen bedeuten:

C: Kontrast
B: Beleuchtung bei der Bildaufnahme
$t_B$: Belichtungszeit für ein Bild
$X_A$: Aussteuerungsgrad eines Sensorelements
$x_n$: an der Abbildung beteiligte Sensorelemente, die durch die Auswertung der Bilder mit den Grenzen $x_{min}$, $x_{max}$ bestimmt werden. Dabei gilt $x_{max} > x_n > x_{min}$. Statt $>$ kann auch $\geq$ gesetzt werden.
Rn: Rauschanteil zu Sensorelement n, z.B. bestimmt durch:

$$R_n = \sqrt{\text{FWC} \cdot x_n} - R_{n,D}$$

mit $R_{n,D}$ als Dunkelrauschen des Sensorelements n FWC: Full well capacity des Sensorelements n
$x_i$: Nachbar-Sensorelement zu den an der Abbildung beteiligten Sensorelementen
Ri: Rauschanteil zu Sensorelement i, z.B. bestimmt durch:

$$R_i = \sqrt{\text{FWC} \cdot x_i} - R_{i,D}$$

mit $R_{i,D}$ als Dunkelrauschen des Sensorelements i FWC: Full well capacity des Sensorelements i

$x_{min}$     Untere Grenze, für die das Sensorelement als an der Abbildung beteiligt angesehen wird.

$x_{max}$     Obere Grenze, für die das Sensorelement als an der Abbildung beteiligt angesehen wird.

Als Beispielwerte für die angegebenen Größen seien genannt:

$x_{min}$: 30 % des Minimalwertes der Abbildung
$x_{max}$: 70 % des Maximalwertes der Abbildung
FWC: 43000 Elektronen
$n_r$: 21 Elektronen

Die Größen B für die Beleuchtung und $t_B$ für die Belichtungszeiten können je nach Awendungsfall modifiziert und bei der Ergebnisberechnung berücksichtigt werden.

Auf diese Weise läßt sich die jeweils an der Abbildung beteiligte Anzahl von Sensorelementen bzw. Pixel bestimmen und vorteilhaft auswerten.

Das Rauschen wird dabei zunächst für den statistischen Anteil bestimmt. Soll auch das Dunkelrauschen bestimmt werden, kann z.B. mit einer für die Messung gewählten Kameraeinstellung vor Beginn der Messung ein Dunkelbild aufgenommen werden, das von den gemessenen Bildern abgezogen wird, um so den Rauschanteil des Dunkelbildes zu berücksichtigen.

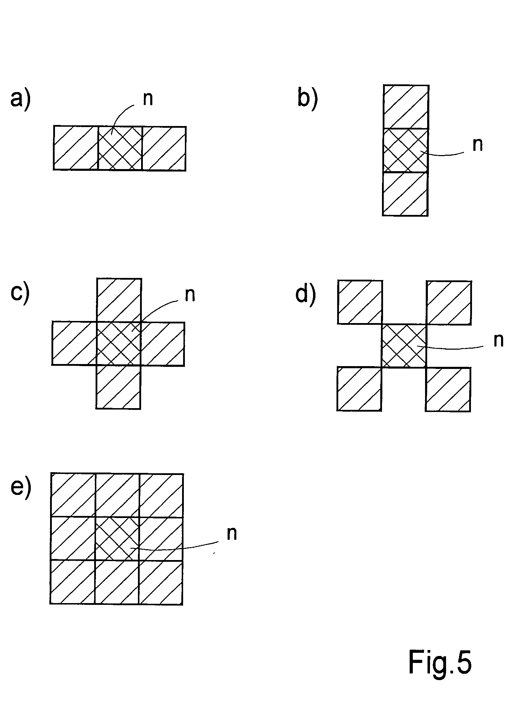

In Fig.5 sind beispielhaft Konstellationen benachbarter Sensorelemente dargestellt, die der Auswertung zugrunde gelegt werden können. Darüber hinaus sind weitere Konstellationen denkbar, bei denen noch entfernter liegende Nachbar-Sensorelemente in der Auswertung berücksichtigt werden.

So sind in Fig.5a und Fig.5b jeweils drei benachbarte, in Linie ausgerichtete Sensorelemente eines CCD-Sensors zur Auswertung hinzugezogen worden. In Fig.5c und Fig.5d sind jeweils fünf Sensorelemente berücksichtigt worden, die in der dargestellten Weise dem an der Abbildung beteiligten Sensorelement benachbart sind. In der Darstellung nach Fig.5e werden neun benachbarte Sensorelemente ausgewertet.

Dabei erfolgt nach Fig.5a und Fig.5b die Bewertung eines Sensorelementes n jeweils anhand von zwei Nachbar-Sensorelementen, in Fig.5c und Fig.5d die Bewertung des Sensorelementes n jeweils anhand von vier Nachbar-Sensorelementen und nach Fig.5e die Bewertung des Sensorelementes n anhand von acht Nachbar-Sensorelementen.

Welche dieser Varianten der Auswertung zugrundegelegt wird, kann von der verfügbaren oder angestrebten Rechenzeit abhängig gemacht werden oder auch von Informationen über die Struktur der Objektoberfläche, so daß der Auswertealgorithmus optimiert angewendet werden kann.

Denkbar ist es weiterhin, den Auswertealgorithmus auch selbstlernend auszuführen, indem der Algorithmus nach einem groben ersten Durchlauf und nachfolgender Kaskadierung mehrerer Durchläufe eine Optimierung in dem Sinne vornimmt, daß danach nur noch die notwendigsten Berechnungen vorgenommen werden.

Diesbezüglich kann z.B. vorgesehen sein die ermittelten Summen so aufzuspalten, daß die unterschiedlichen Sensorelemente-Auswahlen erkennbar sind und die Teilergebnisse auf Signifikanz bewertet werden. In nachgeschalteten Schritten können dann die nicht-signifikaten Teilergebnisse in der Berechnung weggelassen werden, so daß die erforderliche Rechenzeit verringert wird.

Derartige Fälle treten z.B. bei Objekten mit Linienstrukturen auf, die sich nur in einer Bildrichtung erstrecken. Die Berechnung der Kontrastwerte mit Auswahl von Nachbar-Sensorelementen erfolgt dann senkrecht zur Linienstruktur.

Die Signifikanz kann auch wieder anhand eines Schwellwertes bewertet werden, der prozentual vom größten Einzelkontrastwert einen Wert festlegt, den die anderen Kontrastwerte überschreiten müssen, um noch als signifikant zu gelten.

Dies kann beispielsweise folgendermaßen ausgeführt werden:

1. Bestimmung der Kontrastwerte immer mit zwei Nachbar-Sensorelementen, wie z.B. in waagerechter, senkrechter und den beiden diagonalen Richtungen;
2. Bestimmung des Maximalwertes dieser vier Kontrastwerte;
3. Bestimmung des Schwellwertes aus dem Maximalwert, ab dem die anderen Werte noch als signifikant gelten. Vorgabe eines Schwellwertes, z.B.
     50% Schwellwert = 50% des Maximalwertes;
4. Vergleich der übrigen Kontrastwerte mit dem Schwellwert und festhalten der Werte bzw. Berechnungswege für die nachfolgende Fokusbestimmung, die den Schwellwert übersteigen; und
5. Erneute Anwendung der Methode zur Bestimmung des Best Fokus mit neuen Einstellungen zum präziseren Auffinden des Best Fokus.

Neben dem Vorteil der verkürzten Rechenzeit bringt die Trennung der weniger signifikanten Werten von signifikanten Werten auch noch eine Verbesserung der Qualität des Rechenergebnisses.

Im Verfahrensablauf können Interpolationsverfahren genutzt werden, um den Rechenvorgang bei der Bestimmung von Ergebniswerten zu beschleunigen. Auch ist es möglich, selbstlernende Algorithmen zu verwenden, um den Rechenaufwand zu reduzieren.

Zwecks Kompensation von Abweichungen in den Meßbedingungen, wie etwa aufgrund eines Objektivwechsels oder wegen der Änderung der Arbeits-Wellenlänge, können auf die Best-Fokus-Position bezogene Korrekturfaktoren vorgegeben werden.

**Patentansprüche**

1. Verfahren zum automatischen Fokussieren bei der Abbildung von Strukturen eines Objektes, wie Kanten und Konturen, mittels einer Abbildungsoptik auf eine Empfangseinrichtung, die eine aus einer Vielzahl von Sensorelementen gebildete Empfangsfläche aufweist, wobei

   - die Position des Objektes und die Position des Fokuspunktes relativ zueinander verändert werden und nach jeder Veränderung dieselbe Objektstruktur abgebildet wird,
   - für jede dabei gewonnene Abbildung die Anzahl x der Sensorelemente bestimmt wird, die an der Abbildung beteiligt sind,
   - diese Anzahl x dem Abstand z zugeordnet wird, bei dem die betreffende Abbildung gewonnen wurde und
   - als Fokusabstand $z_F$ der Abstand z eingestellt wird, bei dem die Anzahl x der an der Abbildung beteiligten Sensorelemente am kleinsten ist.

2. Verfahren nach Anspruch 1, **dadurch gekennzeichnet, daß**

   a) zunächst ein Abstand $z_1$ zwischen der Abbildungsoptik und dem Objekt einstellt wird,
   b) bei dem Abstand $z_1$ die Objektstruktur abgebildet und die Anzahl $x_1$ der Sensorelemente ermittelt und gespeichert wird, die an dieser Abbildung $A_1$ beteiligt sind und die ein Empfangssignal mit einem Intensitätswert I abgeben, der im Bereich zwischen zwei vorgegebenen Intensitätswerten $I_a$ und $I_b$ liegt,
   c) anschließend ein gegenüber dem Abstand $z_1$ veränderter Abstand $z_2$ eingestellt, wiederum die Objektstruktur abgebildet und die Anzahl $x_2$ der Sensorelemente ermittelt wird, die an dieser neuen Abbildung $A_2$ beteiligt sind,
   d) danach die Differenzanzahl $\Delta x_{12}=x_1-x_2$ gebildet und bewertet wird, wobei

   - bei einem Ergebnis mit negativem Vorzeichen ($x_1<x_2$) der Verfahrensschritt c) in entgegengesetzter Stellrichtung wiederholt wird,
   - bei einem Ergebnis mit positivem Vorzeichen ($x_1>x_2$)

      - weitere geänderte Abstände $z_3,z_4...z_n$ eingestellt werden,
      - nach jeder Abstandsänderung die Objektstruktur abgebildet wird, die Anzahlen $x_3, x_4...x_{n+1}$ der jeweils an den zugeordneten Abbildungen $A_3, A_4...A_n$ beteiligten Sensorelemente ermittelt wird und daraus die Differenzanzahlen $\Delta x_{23}=x_2-x_3; \Delta x_{34}=x_3-x_4 ... \Delta x_{nn+1}=x_nx_{n+1}$ gebildet werden,

   e) die Verfahrensschritte nach d) dann abgebrochen werden, wenn sich nach einer Abstandsänderung eine Differenzanzahl $\Delta x_{12}, \Delta x_{23} ... \Delta x_{nn+1}$ ergibt, die kleiner ist als eine als Abbruchkriterium vorgegebene Differenzanzahl $\Delta x_A$, und
   f) der bei Abbruch erreichte Abstand $z_2,z_3...z_n$ mit minimalem $x_n$ als Fokusabstand $z_F$ eingestellt wird.

3. Verfahren nach Anspruch 2 zur automatischen Fokussierung bei der zeitlich aufeinander folgenden Abbildung einer Serie von Objekten mit jeweils derselben Objektstruktur, **dadurch gekennzeichnet, daß**

   - bei einem ersten Objekt der Serie die Verfahrensschritte a) bis e) ausgeführt werden und dann die Anzahl $x_F$ der Sensorelemente gespeichert wird, die beim Erreichen des Abbruchkriteriums an der Abbildung beteiligt sind,
   - beim zweiten und jedem weiteren Objekt zunächst ein Abstand $z_1$ einstellt, die Objektstruktur abgebildet und die Anzahl $x_1$ ermittelt wird,
   - jeweils nach einer Abstandsänderung die Objektstruktur erneut abgebildet wird, für jede Abbildung die Anzahl x der Sensorelemente bestimmt wird, die an der Abbildung beteiligt sind und diese Anzahl x mit der gespeicherten Anzahl $x_F$ verglichen wird, und

- als Fokusabstand $z_F$ der Abstand $z_2$, $z_3...z_n$ eingestellt wird, bei dem die Anzahl x von der Anzahl $x_F$ um einen vorgegebenen Minimalwert, bevorzugt um den Wert "null", abweicht.

4. Verfahren nach den Ansprüchen 1 bis 3, **dadurch gekennzeichnet, daß** zunächst Abstandsänderungen um Beträge $s_1$ und danach Abstandsänderungen um Beträge $s_2<s_1$, $s_3<s_2$, $s_4<s_3$, ... $s_{n+1}<s_n$ vorgenommen werden, wobei bevorzugt der Betrag $s_1$ zur Grobeinstellung dient und im Bereich zwischen 5 µm und 1,5 mm liegt und die Beträge $s_2,s_3 ... s_{n+1}$ zur Feineinstellung dienen und im Bereich von 0,1 nm und 0,05 mm liegen.

5. Verfahren nach einem der Ansprüche 2 bis 4, **dadurch gekennzeichnet, daß** jeweils im Anschluß an die Zählung der Sensorelemente, die an einer Abbildung beteiligt sind und die ein Empfangssignal mit einem Intensitätswert I innerhalb eines Bereiches zwischen zwei vorgegebenen Intensitätswerten $I_a$ und $I_b$ abgeben, eine Bewertung der Abweichung der Empfangssignale benachbarter Sensorelemente vorgenommen und dadurch die Genauigkeit bei der Bestimmung der besten Fokusposition verbessert wird.

6. Anordnung zur Ausübung des Verfahrens nach den vorhergehenden Ansprüchen, umfassend:

- ein als CCD-Sensor ausgebildetes Array aus einer Vielzahl von optoelektronischen Sensorelementen,
- einer Abbildungsoptik zur Abbildung einer Objektstruktur auf den CCD-Sensor,
- eine mit einem Antrieb versehene Zustelleinrichtung zur Änderung des Abstandes $\Delta z$ zwischen der Abbildungsoptik und dem Objekt um Beträge $s_1,s_3...s_n$, und
- eine Auswerteeinrichtung mit

  - einem Speicher für die Anzahlen $x_1,x_2...x_n,x_{n+1}$ an Sensorelementen, die jeweils an der Abbildung der Objektstruktur beteiligt sind, und
  - einer Rechenschaltung zur Differenzbildung $\Delta x_{12}=x_1 x_2$; $\Delta x_{23}=x_2-x_3$ ... $\Delta x_{nn+1}=x_n-x_{n+1}$, wobei

- die Auswerteeinrichtung über einen Ausgang für Stellsignale verfügt und über diesen mit dem Antrieb der Zustelleinrichtung verbunden ist.

I = Intensität des
Empfangssignals

Abbildung $A_1$
$x_{I_a} - x_{I_b} = x_1$

$I_{max}$

$I_b$

$I_a$

$I_{min}$

$x_{I_b}$

$x_{I_a}$

x = Anzahl Sensorelemente

Fig.1a

I = Intensität des
Empfangssignals

Abbildung $A_2$
$x_{I_a} - x_{I_b} = x_2$

$I_{max}$

$I_b$

$I_a$

$I_{min}$

$x_{I_b}$

$x_{I_a}$

x = Anzahl Sensorelemente

Fig.1b

Fig.2

Initialisierung des optischen Systems

Abstand $z_1$ einstellen

Abbildung $A_1$ aufnehmen
Anzahl $x_1$ bestimmen

Abstand $z_2$ einstellen
$z_1 - s_1 = z_2$

Abstand $z_2$ einstellen
$z_1 + s_1 = z_2$

Abbildung $A_2$ aufnehmen
Anzahl $x_2$ bestimmen

nein

Prüfen $x_1 > x_2$ ?

ja

ja

$x_1 - x_2 \leqq \Delta x_A$?

nein

Abstand $z_3$ einstellen  $\begin{array}{l} z_2 + s_1 = z_3 \ \ \text{bei } x_1 > x_2 \\ z_2 - s_1 = z_3 \ \ \text{bei } x_1 < x_2 \end{array}$

Abbildung $A_3$ aufnehmen
Anzahl $x_3$ bestimmen

ja

$x_2 - x_3 \leqq \Delta x_A$ ?

nein

Abbildungen $A_4$, $A_5$, ... $A_n$, $A_{n+1}$ aufnehmen
Anzahlen $x_4$, $x_5$, ... $x_n$, $x_{n+1}$ bestimmen

$x_n - x_{n+1} \leqq \Delta x_A$ ?

ja

Fokusposition gefunden, Fokus
oder Offset zu Fokus einstellen

Abbruchkriterium erreicht!

Fig.3

Fig.4

a) n

b) n

c) n

d) n

e) n

Fig.5

**Europäisches Patentamt**

## EUROPÄISCHER RECHERCHENBERICHT

Nummer der Anmeldung

EP 04 01 5052

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 197 26 696 A (JENOPTIK JENA GMBH) 7. Januar 1999 (1999-01-07) | 1-4,6 | G02B21/24 |
| Y | * Spalte 4, Zeile 54 - Spalte 5, Zeile 19 * | 5 | |
| | * Spalte 5, Zeilen 45-53 * * Abbildungen * | | |
| X | EP 0 111 635 A (IBM) 27. Juni 1984 (1984-06-27) * Seite 6 * | 1 | |
| Y | WO 02/082156 A (SMITH BRIAN JOHN EDWARD ; BELL IAN MAC (GB); RENISHAW PLC (GB); GIBBS) 17. Oktober 2002 (2002-10-17) | 5 | |
| A | * Seite 5, Zeile 23 - Seite 7, Zeile 1; Abbildungen 3,4 * | 1 | |
| D,A | DE 33 40 647 A (WILL WETZLAR GMBH) 23. Mai 1985 (1985-05-23) * Zusammenfassung * | 1 | |
| A | DE 38 10 882 A (KANZAKI PAPER MFG CO LTD) 20. Oktober 1988 (1988-10-20) * Spalte 7, Zeilen 10-51; Abbildung 2 * | 1 | RECHERCHIERTE SACHGEBIETE (Int.Cl.7) G02B |
| A | US 4 829 374 A (MIYAMOTO SEIICHI ET AL) 9. Mai 1989 (1989-05-09) * Zusammenfassung * | 1 | |
| A | WO 96/12981 A (KLA INSTR CORP ; KATZ ISAAC (IL); FAEYRMAN MICHAEL (IL); ELISHA YEHUDA) 2. Mai 1996 (1996-05-02) * Zusammenfassung * | 1 | |
| A | DE 33 28 821 A (ZEISS CARL FA) 28. Februar 1985 (1985-02-28) * Seite 7, Zeilen 10-21 * | 1 | |

Der vorliegende Recherchenbericht wurde für alle Patentansprüche erstellt

| Recherchenort | Abschlußdatum der Recherche | Prüfer |
|---|---|---|
| Den Haag | 14. Oktober 2004 | Mollenhauer, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 04 01 5052

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-10-2004

| Im Recherchenbericht angeführtes Patentdokument | | Datum der Veröffentlichung | Mitglied(er) der Patentfamilie | | | Datum der Veröffentlichung |
|---|---|---|---|---|---|---|
| DE 19726696 | A | 07-01-1999 | DE | 19726696 | A1 | 07-01-1999 |
| | | | WO | 9859235 | A1 | 30-12-1998 |
| | | | DE | 59810959 | D1 | 15-04-2004 |
| | | | EP | 0991934 | A1 | 12-04-2000 |
| | | | JP | 2002511142 | T | 09-04-2002 |
| | | | US | 6696679 | B1 | 24-02-2004 |
| EP 0111635 | A | 27-06-1984 | EP | 0111635 | A2 | 27-06-1984 |
| | | | JP | 59123811 | A | 17-07-1984 |
| WO 02082156 | A | 17-10-2002 | EP | 1373957 | A2 | 02-01-2004 |
| | | | WO | 02082156 | A2 | 17-10-2002 |
| | | | JP | 2004524576 | T | 12-08-2004 |
| | | | US | 2004114823 | A1 | 17-06-2004 |
| DE 3340647 | A | 23-05-1985 | DE | 3340647 | A1 | 23-05-1985 |
| DE 3810882 | A | 20-10-1988 | JP | 2021202 | C | 19-02-1996 |
| | | | JP | 7038046 | B | 26-04-1995 |
| | | | JP | 63243907 | A | 11-10-1988 |
| | | | DE | 3810882 | A1 | 20-10-1988 |
| | | | US | 4897537 | A | 30-01-1990 |
| US 4829374 | A | 09-05-1989 | JP | 63127148 | A | 31-05-1988 |
| | | | DE | 3739027 | A1 | 19-05-1988 |
| WO 9612981 | A | 02-05-1996 | JP | 8211297 | A | 20-08-1996 |
| | | | WO | 9612981 | A1 | 02-05-1996 |
| DE 3328821 | A | 28-02-1985 | DE | 3328821 | A1 | 28-02-1985 |
| | | | DE | 3446727 | A1 | 03-07-1986 |

EPO FORM P0461

Für nähere Einzelheiten zu diesem Anhang : siehe Amtsblatt des Europäischen Patentamts, Nr.12/82